# FASCICULE DE BREVET EUROPEEN

(11) **EP 3 812 732 B1**
(45) Date de publication et mention de la délivrance du brevet: **08.06.2022**
(21) Numéro de dépôt: 20203653.9
(22) Date de dépôt: 23.10.2020
(51) Int. Cl.: G01M 3/28, G01M 3/32, G01M 3/02

(54) **DISPOSITIF DE TEST D'ETANCHEITE DE SYSTEMES POUR ISOLER DEUX MILIEUX DE MANIERE ETANCHE**
VORRICHTUNG FÜR DIE DICHTHEITSPRÜFUNG VON SYSTEMEN ZUR ABDICHTENDEN ISOLIERUNG ZWEIER MEDIEN
SEALING TESTING DEVICE FOR SYSTEMS FOR ISOLATING TWO MEDIA IN A SEALED MANNER

(30) Priorité: 25.10.2019 FR 1911999
(43) Date de publication de la demande: 28.04.2021
(73) Titulaire: Getinge Life Science France, 41100 Vendôme (FR)
(72) Inventeur: PAPIN, Didier, 41100 Selommes (FR)
(74) Mandataire: Brevalex

(56) Documents cités:
- FR-A1- 2 643 713
- US-A- 3 603 138
- US-A1- 2019 094 102
- US-B1- 6 591 662

## Description

### DOMAINE TECHNIQUE ET ÉTAT DE LA TECHNIQUE ANTÉRIEURE

La présente invention se rapporte à un dispositif de test d'étanchéité de systèmes pour isoler deux milieux de manière étanche, par exemple pour système de transfert à double porte, et pour les gants permettant une manipulation dans un environnement étanche.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger l'environnement, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de transfert à double porte.

Un tel dispositif à double porte muni d'une commande à multiples sécurités est par exemple connu du document FR 2 695 343. Chaque volume est clos par une porte montée dans une bride. Chaque porte est solidarisée à sa bride par une liaison baïonnette et les deux brides sont destinées à être solidarisées l'une à l'autre par une liaison baïonnette.

Par exemple l'un des volumes clos est formé par un isolateur et l'autre volume est formé par un conteneur.

Classiquement la partie de connexion portée par l'isolateur est désignée partie alpha et la partie de connexion portée par le conteneur est désignée partie bêta.

Avant la connexion des deux volumes clos, on souhaite vérifier que chaque partie alpha et bêta respecte les critères d'étanchéité afin d'éviter tout risque de contamination intérieure ou extérieure lors de la connexion des deux volumes clos.

Une technique utilisée pour vérifier l'étanchéité des parties alpha et bêta met en œuvre un dispositif comportant une cavité dont l'ouverture est bordée par un joint torique fin et relativement rigide, le joint étant destiné à être appliqué contre une surface fine de la bride de la partie alpha ou de la partie bêta afin de définir avec elle un volume de test, dont on teste l'étanchéité. Par exemple on génère un niveau de pression donné, par exemple on abaisse la pression, dans le volume et on vérifie si celui-ci est stable au cours du temps.

Le dispositif est fixé sur la partie alpha ou la partie bêta de sorte à presser le joint contre la surface de la partie alpha ou la partie bêta.

Dans un autre exemple, l'isolateur forme une boîte à gants et le gant permet à un opérateur d'intervenir à l'intérieur de la boîte à gants tout en restant isolé de l'intérieur de la boîte à gants. On souhaite également vérifier l'étanchéité du gant avant son utilisation.

Dans l'état de la technique, il convient de mentionner également les documents US 3 603 138, FR 2 643 713 et US 2019/094102 A1 qui divulguent des dispositifs de test d'étanchéité d'un gant comprenant un joint gonflable. En outre le document US 6 591 662 B1 divulgue un dispositif de test d'étanchéité d'un système de transfert à double porte.

Par ailleurs, on souhaite que les dispositifs de test soient peu encombrants et légers.

### EXPOSÉ DE L'INVENTION

C'est par conséquent un but de la présente invention d'offrir des dispositifs de test d'étanchéité peu encombrants et de masse réduite, permettant la vérification d'étanchéité de systèmes pour isoler deux milieux de manière étanche, pour vérifier l'étanchéité par exemple d'au moins une partie d'un système de transfert à double porte, ou d'un gant monté sur une boîte à gant.

Le but énoncé ci-dessus est atteint par un dispositif de test d'étanchéité comportant un boîtier comprenant un joint gonflable destiné à coopérer avec le système à tester pour délimiter un volume de test, et une pompe unique qui assure à la fois le gonflage du joint, et le test d'étanchéité.

Dans le cas du test d'un gant, la pompe peut assurer le gonflage du gant qui forme le volume de test. Dans le cas du test d'un système de transfert à double porte, la pompe peut assurer la mise au vide du volume de test.

Pour tester l'étanchéité d'un gant ou tout système comportant une partie souple, on choisit de préférence une pompe capable de gonfler un volume important à faible pression pour gonfler le gant ou la partie souple, et de gonfler un volume réduit avec une pression élevée pour gonfler le joint gonflable, ce qui permet de réaliser le test d'étanchéité d'un gant ou d'un système muni d'une partie souple dans un temps acceptable.

Pour tester l'étanchéité d'un système de transfert à double porte, on choisit de préférence une pompe capable de gonfler un volume réduit avec une pression élevée et de générer une dépression entre le boîtier du dispositif et la partie alpha ou la partie bêta.

De manière très avantageuse, la pompe est une pompe à membrane ou à diaphragme qui permet à la fois un gonflage d'un volume important à faible pression, le gonflage d'un volume réduit à pression élevée, et la génération d'une dépression.

En d'autres termes, le dispositif de test d'étanchéité met en œuvre une seule pompe capable de gonfler le joint et d'établir une pression dans un volume dont l'étanchéité est à vérifier et un circuit pneumatique commandable pour établir les connexions pneumatiques requises pour les différentes étapes du test d'étanchéité.

La présente invention a alors pour objet un dispositif de test d'étanchéité d'au moins un système pour isoler deux milieux de manière étanche, ledit dispositif de test comportant un boîtier comprenant un joint gonflable destiné à venir, à l'état gonflé, en contact avec le système et à assurer une étanchéité permettant de définir un volume de test entre le système et le boîtier, une pompe pneumatique et un circuit pneumatique configuré, dans une première étape, pour connecter la pompe au joint gonflable de sorte que la pompe gonfle le joint gonflable, et dans une deuxième étape, pour connecter la pompe au volume de test de sorte que la pompe génère dans le volume de test une pression à une valeur donnée, et des moyens pour mesurer la pression dans le volume de test.

Dans un exemple de réalisation, le circuit pneumatique comporte au moins un distributeur entre la pompe et le joint gonflable, au moins un distributeur entre la pompe et le volume de test, et au moins un distributeur entre le joint gonflable, le volume de test et une zone de vidange.

Le distributeur entre la pompe et le volume de test est avantageusement configuré pour assurer une connexion du volume de test soit à un orifice de pression de la pompe, soit à un orifice de dépression de la pompe.

Le circuit pneumatique comporte de préférence des moyens de surveillance de pression dans le joint gonflable.

La pompe est avantageusement une pompe à diaphragme.

Le dispositif de test d'étanchéité comporte de préférence une unité de contrôle configurée pour commander la pompe et le circuit pneumatique.

Par exemple, le système à vérifier étant un système de transfert à double porte d'un isolateur, la pompe peut alors être configurée pour réduire la pression dans le volume de test par rapport à la pression extérieure.

Dans un autre exemple, le système à vérifier est un système de transfert à double porte d'un conteneur, la pompe peut alors être configurée pour réduire la pression dans le volume de test par rapport à la pression extérieure.

Selon une caractéristique additionnelle, le dispositif de test d'étanchéité comporte des moyens de fixation configurés pour coopérer avec le système à tester, par exemple des moyens de fixation de type baïonnette.

Lorsque le système à vérifier est un système comprenant une partie souple, le système étant par exemple un gant, le circuit est avantageusement configuré pour gonfler la partie souple.

Dans le cas où le système à vérifier est soit un système comprenant une partie souple, soit un système de transfert à double porte d'un isolateur ou d'un conteneur, dans lequel, dans le cas du test d'un système comprenant une partie souple, l'unité de contrôle est configurée pour connecter dans une phase de test le système comprenant une partie souple à l'orifice de pression de la pompe et pour connecter, à la fin du test, le système comprenant une partie souple à l'orifice de dépression de la pompe et, dans le cas du test d'un système de transfert à double porte, l'unité de contrôle est configurée pour connecter dans une phase de test le volume de test à l'orifice de dépression de la pompe.

Selon une caractéristique additionnelle, l'unité de contrôle comporte des moyens pour émettre un signal représentatif du résultat du test d'étanchéité.

Les distributeurs sont par exemple des électrovannes.

La présente invention a également pour objet un procédé de test d'étanchéité d'un système pour isoler deux milieux de manière étanche mettant en œuvre un dispositif de test d'étanchéité selon l'invention, et comprenant les phases suivantes :
- Montage du dispositif sur le système.
- Connexion pneumatique de la pompe au joint gonflable.
- Activation de la pompe jusqu'à ce que la pression dans le joint gonflable atteigne une première valeur donnée.
- Arrêt de la pompe.
- Connexion pneumatique de la pompe au volume de test.
- Activation de la pompe pour établir une pression à une deuxième valeur donnée dans le volume de test.
- Arrêt de la pompe.
- Suivi de la pression dans le volume de test.
- Émission d'un signal représentatif du résultat du test.
- Vidange du joint gonflable et du volume de test le cas échéant.

La première valeur donnée est par exemple de l'ordre de 2 bar.

Dans le cas où le système est un système de transfert à double porte d'un isolateur ou d'un conteneur, la première valeur donnée est de préférence une pression inférieure à la pression extérieure.

Dans le cas d'un système comprenant une partie souple, la deuxième valeur est de préférence une pression positive de l'ordre de quelques mbar à quelques dizaines de mbar.

Avantageusement, pour l'étape de vidange, le système comprenant une partie souple est connecté à l'orifice de dépression de la pompe.

### BRÈVE DESCRIPTION DES DESSINS

La présente invention sera mieux comprise sur la base de la description qui va suivre et des dessins en annexe sur lesquels:
La figure 1A est une vue en coupe longitudinale illustrant schématiquement le raccordement d'un conteneur sur une cellule au moyen d'un dispositif de transfert étanche à double porte par des moyens de type baïonnette.
La figure 2A est une vue en coupe longitudinale représentant schématiquement un exemple d'un dispositif de test d'étanchéité avant son montage sur un isolateur, le joint étant à l'état non gonflé.
La figure 2B est une vue en coupe longitudinale représentant schématiquement le dispositif de test d'étanchéité de la figure 2A monté sur l'isolateur, le joint étant à l'état non gonflé.
La figure 2C est une vue en coupe longitudinale représentant schématiquement le dispositif de test d'étanchéité de la figure 2A monté sur l'isolateur, le joint étant à l'état gonflé.
La figure 3 est une représentation schématique d'un exemple de circuit pneumatique du dispositif de test d'étanchéité mis en œuvre pour tester l'étanchéité d'un système de transfert à double porte monté sur un isolateur.
La figure 4 est une représentation schématique d'une variante du circuit pneumatique de la figure 3.
La figure 5A est une vue en coupe longitudinale représentant schématiquement un exemple d'un dispositif de test d'étanchéité avant son montage sur un conteneur, le joint étant à l'état non gonflé.
La figure 5B est une vue en coupe longitudinale représentant schématiquement le dispositif de test d'étanchéité de la figure 5A monté sur un conteneur, le joint étant à l'état non gonflé.
La figure 5C est une vue en coupe longitudinale représentant schématiquement le dispositif de test d'étanchéité de la figure 5A monté sur un conteneur, le joint étant à l'état gonflé.
La figure 6 est une vue en coupe longitudinale représentant schématiquement un exemple d'un dispositif de test d'étanchéité pour tester l'étanchéité d'un gant.
La figure 7 est une représentation schématique d'un exemple de circuit pneumatique du dispositif de test d'étanchéité mis en œuvre pour tester l'étanchéité d'un gant et également adapté pour tester l'étanchéité d'un système de transfert à double porte.
La figure 8 est une représentation schématique d'un autre exemple de circuit pneumatique du dispositif de test d'étanchéité mis en œuvre pour tester l'étanchéité d'un gant.

### EXPOSÉ DÉTAILLÉ DE MODES DE RÉALISATION PARTICULIERS

Le dispositif de test d'étanchéité selon l'invention est destiné à tester l'étanchéité d'un système pour isoler deux milieux de manière étanche. Le système peut être, par exemple, sans que cela soit limitatif :
- la partie alpha d'un système de transfert à double porte portée par une paroi d'un isolateur et qui isole l'intérieur de l'isolateur de l'environnement extérieur.
- la partie bêta d'un dispositif de transfert à double porte portée par un conteneur ou un sac souple et qui isole l'intérieur du conteneur ou du sac souple de l'environnement extérieur.
- un gant monté dans un rond de boîte à gants et isolant l'intérieur de la boîte à gants de l'environnement extérieur et permettant à un opérateur d'intervenir dans la boîte à gants tout en étant isolé de l'intérieur de celle-ci.

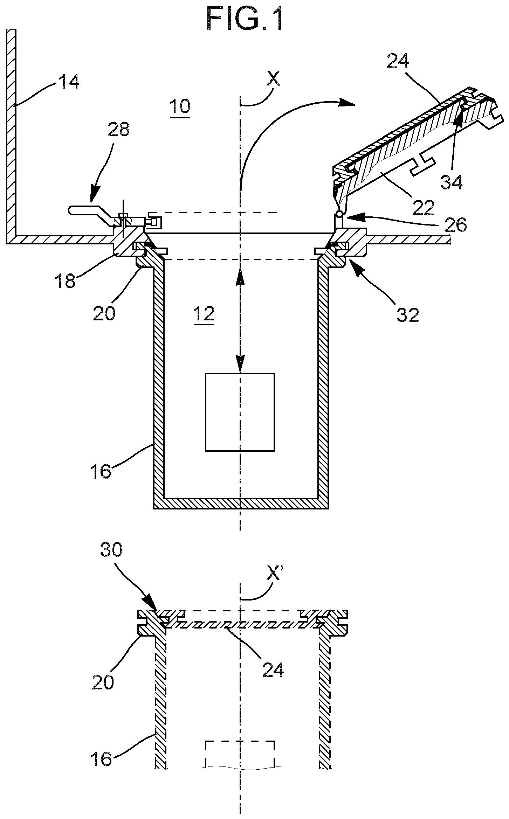

Sur la figure 1, on peut voir une représentation schématique d'un exemple de système de transfert à double porte.

Dans la description qui va suivre les deux volumes clos dont on souhaite tester l'étanchéité avant leur connexion correspondent respectivement à un isolateur 10 et à un conteneur 12. On comprendra cependant que l'invention est aussi applicable dans le cas où les volumes clos seraient de manière non limitative, par exemple, pour l'un une boîte à gant et pour l'autre un conteneur ou une boîte à gants.

L'isolateur 10 est délimité par une paroi 14 dont une partie seulement est visible sur la figure 1. Il est équipée, de façon classique, par exemple de moyens de manipulation à distance tels que des télémanipulateurs et/ou des gants (non représentés) solidaires de la paroi 14, grâce auxquels le mécanisme de commande centralisé peut être manœuvré depuis l'intérieur de cette cellule 10. Le conteneur 12 est également délimité par une paroi 16, comme l'illustre notamment la figure 1.

Le dispositif de transfert étanche à double porte comprend principalement une bride d'isolateur 18, une bride de conteneur 20, une porte d'isolateur 22 obturant normalement une ouverture circulaire délimitée par la bride d'isolateur 18, et une porte de conteneur 24 obturant normalement une ouverture délimitée par la bride de conteneur 20. La bride d'isolateur 18 et la bride de conteneur 20 sont fixées respectivement sur la paroi 14 de l'isolateur 10 et sur la paroi 16 du conteneur 12. La porte 22 de l'isolateur est articulée sur la bride d'isolateur 18 par une charnière 26.

Des moyens désignés de façon générale par la référence 28 (non représentés), permet de commander l'ouverture et la fermeture des portes 22 et 24.

Par exemple, la fixation de la porte de conteneur 24 sur la bride de conteneur 20 est assurée par une liaison à baïonnette 30 comme cela est décrit dans le document FR 2 695 343. Par exemple, pour permettre la solidarisation de la bride de conteneur 20 sur la bride d'isolateur 18 et la solidarisation de la porte de conteneur 24 sur la porte d'isolateur 22, le système de transfert étanche à double porte comprend également deux autres liaisons à baïonnette désignées respectivement par les références 32 et 34. Les trois liaisons à baïonnette 30, 32 et 34 sont agencées de telle sorte qu'après accostage de la bride de conteneur 20 sur la bride d'isolateur 18, une rotation du conteneur 12 autour de son axe, par exemple dans le sens des aiguilles d'une montre, a pour effet de solidariser la bride de conteneur 20 et la bride d'isolateur 18, de solidariser la porte de conteneur 24 et la porte d'isolateur 22, et de désolidariser la porte de conteneur 24 de la bride de conteneur 20. Ces deux dernières opérations s'effectuent de façon consécutive, de telle sorte que l'ouverture du conteneur n'intervient qu'après que la porte de conteneur 24 ait été solidarisée à la porte d'isolateur 22 pour former une double porte.

La bride d'isolateur et la porte d'isolateur sont désignées couramment « partie alpha ». La bride de conteneur et la porte de conteneur sont désignées couramment « partie bêta ».

En général le système de transfert à double porte présente une symétrie de révolution autour de l'axe X qui est l'axe de la bride d'isolateur.

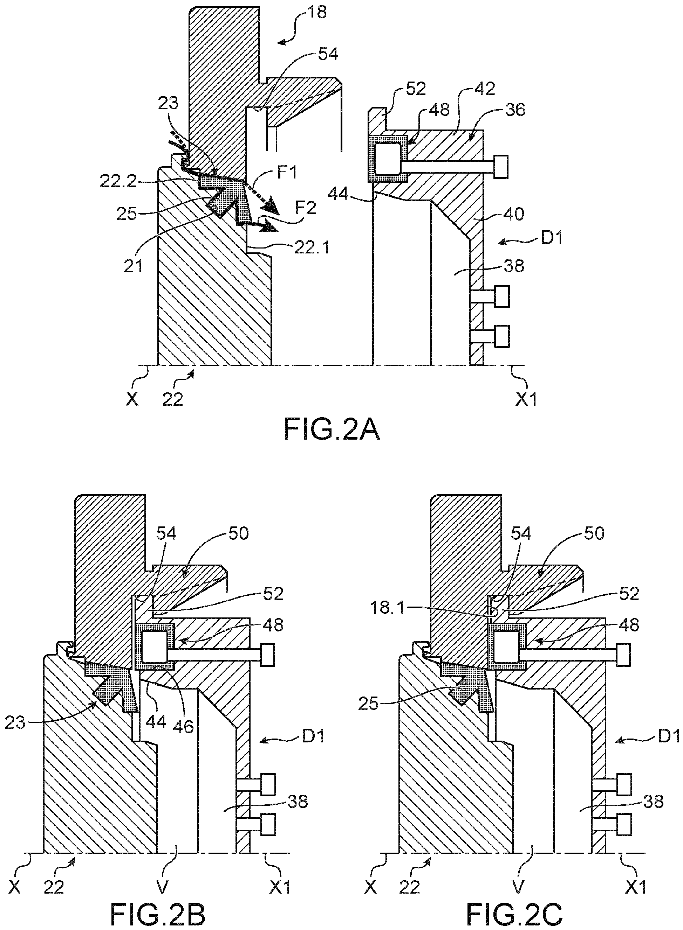

Sur les figures 2A à 2C, on peut voir une représentation schématique d'un exemple de dispositif de test D1 adapté à la vérification de l'étanchéité d'une partie alpha.

Sur les figures 2A à 2C, on peut voir en détail la porte 22 de la partie alpha. Elle comporte un joint 23 monté sur sa face extérieure 22.1 et sur sa périphérie extérieure. Le joint 23 s'étend à la fois sur la face extérieure 22.1 de la porte et sur son bord latéral 22.2. Le joint 23 assure d'une part l'étanchéité entre la porte d'isolateur 22 et la bride d'isolateur 18, et l'étanchéité entre la face extérieure de la porte d'isolateur 22 et la face extérieure de la porte de conteneur 24, isolant ces faces extérieures de l'intérieur des volumes clos.

Le joint 23 est fixé sur la porte d'isolateur 22 au moyen d'un bourrelet annulaire 25 désigné « talon » monté dans une gorge annulaire 21 formée dans la porte d'isolateur 22.

Les fuites potentielles peuvent survenir entre le joint 23 et la bride d'isolateur 18 symbolisées par la flèche F1 ; et entre la porte 22 et le joint 23 au niveau du montage du talon 25, symbolisées par la flèche F2.

Le dispositif de test D1 est réalisé pour permette de détecter les fuites F1 et F2. Le dispositif de test D1 comporte un boitier ou tête 36 délimitant une cavité 38 et comportant un fond 40, une paroi latérale 42 et une ouverture 44 à l'opposé du fond. La cavité 38 s'étend selon un axe longitudinal X1.

Le boîtier 36 comporte une gorge 46 entourant l'ouverture 44 et un joint gonflable 48 monté dans la gorge 46. A l'état non gonflé (figues 2A et 2B) ; le joint gonflable 48 ne fait avantageusement pas saillie de la gorge, réduisant les frottements lors de la connexion du dispositif de test D1 sur la partie alpha. En outre, le joint est protégé. Par exemple, le joint gonflable 48 est collé par sa face opposée à sa face destinée à s'expanser.

Le joint gonflable est par exemple réalisé en élastomère, par exemple en silicone, en styrène butadiène ou SBR (styrene-butadiene rubber en terminologie anglo-saxonne), en EPDM (éthylène-propylène-diène monomère), en fluoropolymère, par exemple en FKM, en nitrile hydrogéné ou HNBR (hydrogenated nitrile butadiene rubber en terminologie anglo-saxonne).

Le diamètre de la cavité est choisi de sorte que le joint gonflable 48, à l'état gonflé, ne vienne pas couvrir les zones de fuite potentielle F1 et F2 de l'isolateur. De plus de préférence, le boîtier est tel qu'il ne vient pas en contact avec le joint 23. Les dimensions du boîtier sont telles que le bord de la gorge 46 adjacent à l'ouverture 44, autrement dit, la cloison entre la gorge 46 et l'ouverture 44 ne vient pas en contact avec le joint 23. Le positionnement du dispositif de test D1 est assuré par les moyens de fixation; à l'état connecté le boîtier et notamment le bord intérieur de la gorge 46 est suffisamment court pour ne pas toucher le joint 23.

Le dispositif de test D1 comporte des moyens de connexion mécanique 50 du boîtier 36 sur la partie alpha, notamment du boîtier sur la bride d'isolateur 18 de sorte que le joint 48, à l'état gonflé, soit en contact avec la face extérieure 18.1 de la bride d'isolateur 18.

De manière avantageuse, les moyens de connexion mécanique 50 coopèrent avec les moyens de solidarisation de la bride de conteneur 20 sur la bride d'isolateur 18. Dans l'exemple décrit, il s'agit de moyens à baïonnette. Ainsi les moyens de connexion mécanique 50 sont identiques à ceux portés par la bride de conteneur 20, puisque le dispositif D1 est monté sur la bride en lieu et place du conteneur.

Dans l'exemple représenté sur les figures 2A à 2C, les moyens de connexion mécanique comportent alors des oreilles 52 pénétrant dans une gorge 54 de la bride d'isolateur 18 et verrouillant en translation les deux brides 18, 20. En variante, les moyens de connexion mécanique peuvent être de type à encliquetage, par vissage...

Le dispositif de test comporte en outre une pompe P1 et un circuit pneumatique C1 reliant sélectivement la pompe P1 au joint gonflable 48 et à la cavité 38. Le circuit C1 n'est pas représenté sur les figures 2A à 2C.

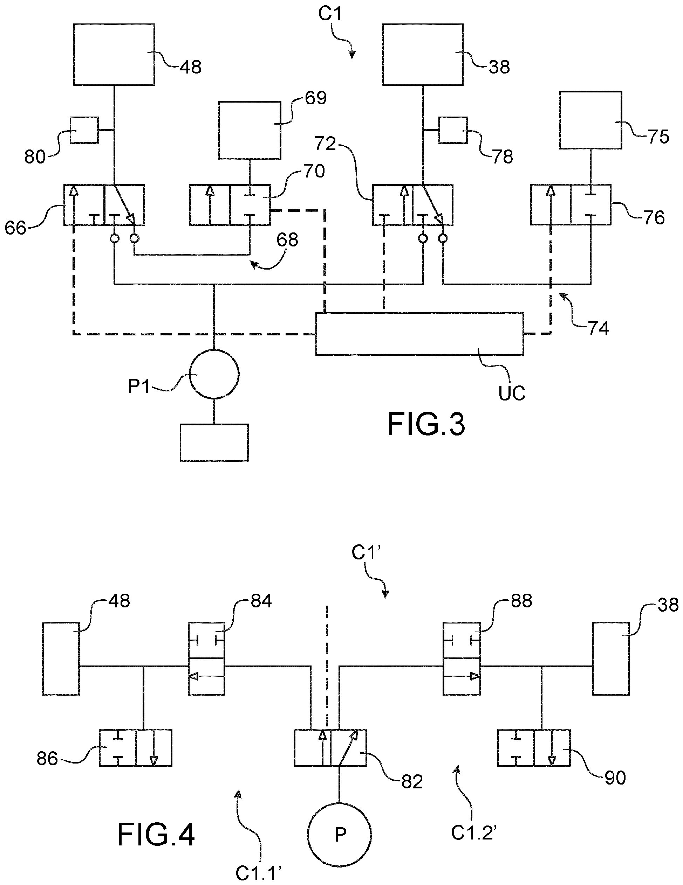

Sur la figure 3, on peut voir une représentation schématique d'un exemple d'un tel circuit pneumatique C1.

Le circuit pneumatique C1 comporte des moyens de connexion sélectifs entre la pompe P1, le joint gonflable 48 et la cavité 38.

De manière avantageuse, les moyens de connexion pneumatique comportent un premier distributeur 3/2 66 formant une vanne de distribution. Le distributeur comportant deux positions et trois orifices, un premier orifice connecté à la pompe P1, un deuxième orifice connecté au joint gonflable 48 et un troisième orifice connecté à un premier système de purge 68 permettant de dégonfler le joint 48.

Le premier distributeur 3/2 66 comporte un tiroir pouvant prendre deux positions telles que, soit il connecte la pompe P1 et le joint 48 et interrompt la communication entre le joint 48 et le premier système de purge 68, soit il connecte le joint 48 et le premier système de purge 68 et interrompt la communication entre la pompe P1 et le joint 48.

Par exemple le premier système de purge 68 comporte un premier distributeur 2/2 70 comportant un premier orifice connecté au troisième orifice du premier distributeur 3/2 66 et un deuxième orifice connecté à une zone de purge 69. Le premier distributeur 2/2 70 comporte deux positions, une position dans laquelle le premier orifice est connecté au deuxième orifice, et une position dans laquelle la connexion entre le premier et le deuxième orifice est interrompue.

De manière avantageuse, les moyens de connexion pneumatique comportent un deuxième distributeur 3/2 72 formant une vanne de distribution, comportant un premier orifice connecté à la pompe P1, un deuxième orifice connecté à la cavité 38 et un troisième orifice connecté à un deuxième système de purge 74 permettant de vidanger la cavité.

Le tiroir du deuxième distributeur 3/2 72 peut prendre deux positions telles que, soit il connecte la pompe P1 et la cavité 38 et interrompt la communication entre la cavité 38 et le deuxième système de purge 74, soit il connecte la cavité 38 et le deuxième système de purge 74 et interrompt la communication entre la pompe P1 et la cavité 38.

Par exemple le deuxième système de purge 74 comporte un deuxième distributeur 2/2 76 comportant un premier orifice connecté au troisième orifice du deuxième distributeur 3/2 72, et un deuxième orifice connecté à une zone de purge 75. Le deuxième distributeur 2/2 76 comporte deux positions, une position dans laquelle le premier orifice est connecté au deuxième orifice, et une position dans laquelle la connexion entre le premier et le deuxième orifice est interrompue.

Les moyens de déplacement des tiroirs des distributeurs 66, 70, 72, 76 sont avantageusement des moyens électromécaniques, les distributeurs étant des électrodistributeurs ou électrovannes. En variante, les moyens de déplacement des tiroirs sont des moyens pneumatiques ou des moyens mécaniques.

Les distributeurs 66, 70, 72, 76 sont avantageusement commandés par une unité de contrôle UC par exemple portée par une carte électronique.

Il sera compris que tout ou partie des distributeurs 66, 70, 72, 76 peuvent être remplacés par des vannes individuelles commandées par l'unité de contrôle UC.

La pompe P1 est telle qu'elle permet le gonflage du joint 48 à une pression de plusieurs bar, par exemple à une pression de 2 bar à un faible débit, en effet le volume du joint est faible. En outre la pompe P1 permet de générer un vide par rapport à la pression extérieure par exemple - 40 mbar dans la cavité 38 qui présente un volume réduit.

Une pompe à diaphragme permet très avantageusement d'assurer à la fois le gonflage du joint et la génération de vide dans la cavité. En variante, une pompe à piston, à palettes ou à ailettes peut être utilisée dans le dispositif de test.

Le circuit pneumatique C1 comporte également des moyens 78 pour contrôler la pression dans la cavité 38 afin de vérifier son étanchéité, les moyens 78 comportent par exemple un capteur de pression. En effet si la pression augmente cela signifie que la partie alpha n'est pas étanche.

De manière très avantageuse il comporte également des moyens de surveillance 80 pour surveiller la pression dans le joint gonflable 48 permettant de vérifier son état et/ou le montage du dispositif sur la bride d'isolateur 18. Par exemple les moyens de surveillance 80 comportent un pressostat. Le pressostat contrôle une perte de pression. La consigne prédéfinie correspond à la valeur de pression de gonflage du joint qui a été préalablement fixée. Le pressostat compare la consigne prédéfinie et la mesure réelle de pression du joint. Lorsque cet écart consigne / mesure dépasse un seuil, par exemple si le joint est percé, le pressostat envoie un signal, par exemple une alarme sous forme de voyant lumineux. Ainsi il est possible de vérifier si la pression reste stable pendant toute la durée du test et que les conditions du test sont valides. Lors du gonflage, le pressostat commande l'arrêt de la pompe quand la pression de gonflage du joint est atteinte.

Le circuit C1 présente un encombrement optimisé avec un nombre de distributeurs réduits.

Le fonctionnement du dispositif D1 de test de l'étanchéité d'une partie alpha va maintenant être décrit.

Le dispositif D1 est connecté sur la bride de la partie alpha comme le serait un conteneur. Dans cet exemple, la connexion du dispositif sur la partie alpha est de type à baïonnette.

Les distributeurs 2/2 70, 76 sont dans un état interrompant les connexions vers les zones de purge 69, 75.

Lorsque le dispositif D1 est monté sur la partie alpha, la cavité 38 du dispositif de test est fermée par la partie alpha, l'unité de contrôle UC commande le premier distributeur 3/2 66 de sorte à connecter la pompe P1 au joint gonflable 48 et commande la pompe P1 pour gonfler le joint 48. Lorsque le joint 48 est suffisamment gonflé la pompe P1 est arrêtée. Le premier distributeur 3/2 66 est ensuite commandé pour isoler le joint 48 et la pompe P1, et pour relier le joint 48 au premier distributeur 2/2 70 qui est en position obturée. Le volume du joint est alors fermé. La cavité 38 délimitée par la partie alpha avec le joint gonflable forme un volume de test V.

La phase de test débute. L'unité de contrôle UC commande le deuxième distributeur 3/2 72 de sorte à connecter la pompe P1 à la cavité 38 et active la pompe P1 de sorte à aspirer le fluide, par exemple l'air, dans la cavité 38 afin de générer une pression négative par rapport à la pression extérieure. Lorsque le niveau de pression souhaité est atteint, le fonctionnement de la pompe P1 est interrompu et le deuxième distributeur 3/2 72 est commuté de sorte à isoler la cavité 38 en la connectant au deuxième distributeur 2/2 76 qui est en position obturée.

Le niveau de pression dans la cavité 38 est ensuite suivi par les moyens 78.

Si la pression augmente, cela signifie qu'il existe une fuite entre l'intérieur de l'isolateur et la cavité. On en déduit que la partie alpha, i.e. la connexion entre la porte et la bride de la partie alpha n'est pas étanche. Le joint gonflable vient en contact avec la partie alpha de sorte à ne pas obturer des zones potentielles de fuite.

Si la pression dans la cavité est stable, on en conclut que la partie alpha est étanche.

Les premier 70 et deuxième 76 distributeurs 2/2 sont ensuite commandés pour connecter le joint 48 et la cavité 38 vers leurs zones de purge respectives 69, 75.

Sur la figure 4, on peut voir une variante C1' du circuit C1.

Le circuit C1' comporte un premier distributeur 3/2 82 connectant sélectivement la pompe au joint gonflable 48 et à la cavité 38.

Le circuit C1' comporte une branche C1.1' entre le distributeur 82 et le joint gonflable 48 et une branche C1.2'entre le distributeur 82 et la cavité 38.

La branche C1.1' comporte un distributeur 2/2 84 autorisant ou non l'écoulement entre le distributeur 82 et le joint gonflable et un distributeur 2/2 86 en aval du distributeur 84 pour vidanger le joint gonflable 48.

La branche C1.2' comporte un distributeur 2/2 88 autorisant ou non l'écoulement entre le distributeur 82 et la cavité 38, et un distributeur 2/2 90 en aval du distributeur 88 pour vidanger la cavité 38.

Les différents distributeurs sont commandés par l'unité de commande.

Le fonctionnement du circuit C1' est similaire à celui du circuit C1.

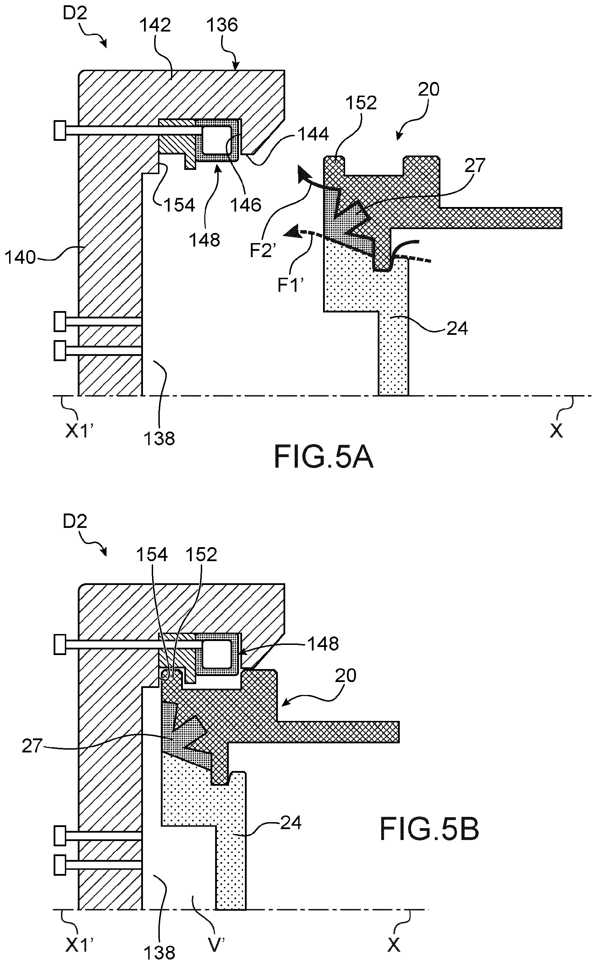

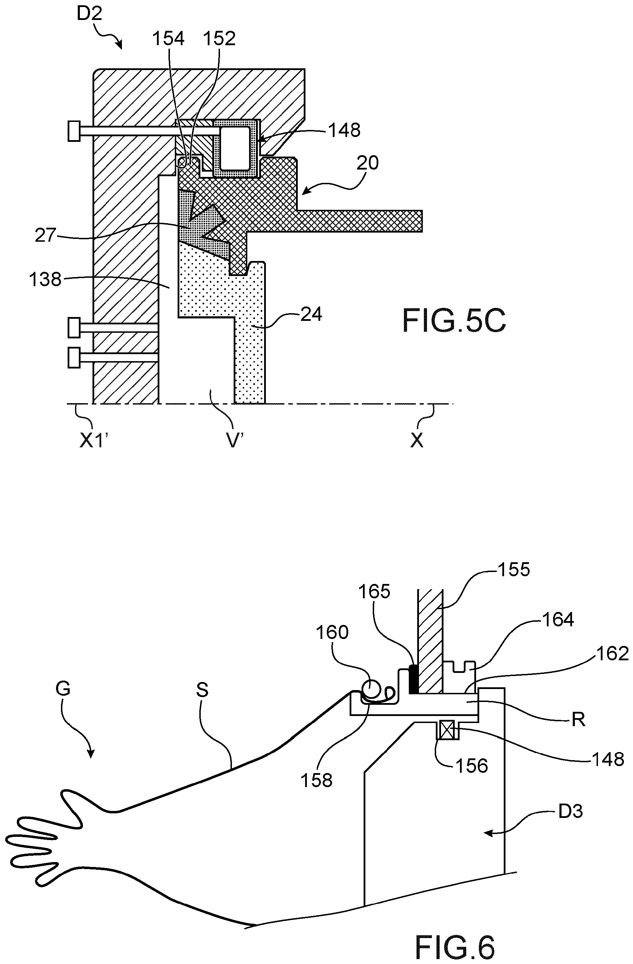

Sur les figures 5A à 5C, on peut voir un exemple de dispositif D2 permettant de tester la partie bêta.

Sur les figures 5A à 5C, on peut voir un dispositif de test d'étanchéité D2 spécialement adapté au test d'étanchéité d'une partie bêta. La bride de conteneur 20 comporte un joint 27 similaire au joint 23 monté sur la porte d'isolateur 22.

Le dispositif D2 est très proche du dispositif D1 en ce qu'il met également en œuvre un joint gonflable pour délimiter une cavité étanche avec la partie bêta. Il diffère du dispositif D1 par le fait que le joint gonflable 148 vient en contact avec la périphérie radialement extérieure de la bride de conteneur 20. Le dispositif D2 présente un axe de révolution X1'.

Le boîtier 136 comporte une cavité 138 délimitée par un fond 140 et une paroi latérale 142, une ouverture 144 de diamètre inférieur au diamètre intérieur de la cavité de sorte à délimiter une gorge radiale 146 dans le boîtier logeant le joint gonflable 148.

Par exemple, le joint gonflable 148 est collé par sa face opposée à la face destinée à s'expanser. Le joint gonflable 148 est collé au fond de la gorge radiale 146. Les exemples de matériaux donnés pour le joint 48 s'appliquent au joint 148.

De manière avantageuse, l'ouverture 144 a un bord radialement intérieur chanfreiné facilitant le montage du boîtier sur la partie bêta.

Le montage du dispositif sur la partie bêta est tel qu'un jeu est laissé entre la face libre de la partie bêta et le fond 140 de la cavité 138 de sorte à ménager un volume de test V' entre la partie bêta et le dispositif et éviter de venir obturer les zones de fuites potentielles F1' et F2'. Le volume V' est typiquement de quelques cm³.

Dans l'exemple représenté sur les figures 5A à 5C, le dispositif de test D2 est configuré pour se connecter à une partie bêta par une connexion de type baïonnette. Dans cet exemple, le dispositif D2 comporte des oreilles 152 disposées dans la gorge radiale 146 entre le fond de la cavité 138 et le joint 148 et venant coopérer avec le bord périphérique extérieur de la bride de conteneur 20.

En variante, les moyens de connexion mécanique peuvent être de type à encliquetage, par vissage...

Le fonctionnement du dispositif de test D2 pour vérifier l'étanchéité de la partie bêta est similaire à celui du dispositif de test de l'étanchéité de la partie alpha. Il ne sera donc pas décrit en détail.

Sur la figure 6, on peut voir une représentation schématique d'un exemple de dispositif D3 permettant de tester l'étanchéité d'un gant G destiné à être monté dans un rond de boîte à gants. Ce dispositif est apte à vérifier l'étanchéité de tout système comprenant au moins une partie ou élément souple que l'on souhaite connecter à l'isolateur. Par exemple il peut s'agir d'un gant, d'une manchette associée à un gant, d'un scaphandre, d'un demi-scaphandre.

Le volume d'un scaphandre ou demi-scaphandre étant sensiblement différent de celui d'un gant, une pompe adaptée pour gonfler un scaphandre ou demi-scaphandre et différente de celle mise en œuvre pour gonfler un gant, sera de préférence utilisée pour réduire la durée du test.

Le gant comporte une partie souple S munie d'une ouverture et destinée à être connectée de manière étanche à un rond de gants R fixé à travers une paroi 155 de l'isolateur.

Le dispositif D3 présente une configuration proche de celle du dispositif D2. Le joint 148 est monté dans une gorge latérale 156 de sorte à venir en contact avec la surface latérale intérieure du rond de gant R. Par exemple comme cela est représenté sur la figure 6, l'ouverture du gant est montée sur une extrémité de rond de gant qui est munie d'une gorge 158 sur sa périphérie extérieure. Un joint torique 160 est monté pardessus le gant dans la gorge 158 et assure le maintien du gant G sur le rond de gant R.

Dans l'exemple représenté, le rond de gant R est muni d'un pas de vis 162 au niveau d'une extrémité opposée à celle portant la gorge 158, le pas de vis étant destiné à être disposé à l'extérieur de l'isolateur. Un écrou 164 est vissé sur le pas de vis de l'extérieur de l'isolateur et immobilise le rond de gant R à travers la paroi. De préférence un joint 165 est interposé entre le rond de gant R et la paroi 155 à l'intérieur de l'isolateur.

Le dispositif D3 comporte une pompe P2 unique et un circuit pneumatique reliant sélectivement la pompe au joint gonflable ou au gant.

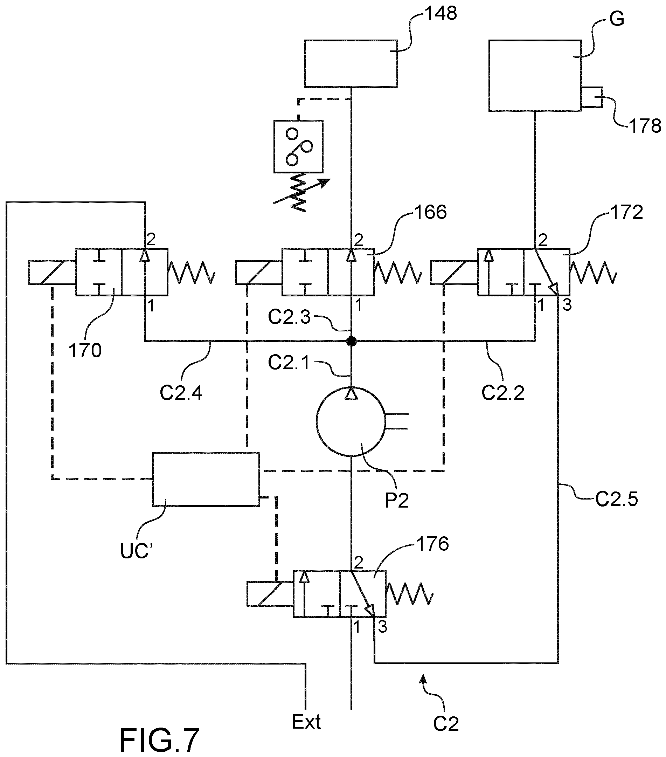

Sur la figure 7, on peut voir une représentation schématique d'un exemple d'un tel circuit pneumatique C2.

Le circuit pneumatique C2 comporte des moyens de connexion sélectifs entre la pompe P2, le joint gonflable 148 et l'intérieur du gant G.

La pompe P2 comporte un orifice de dépression par lequel l'air est aspiré et un orifice de pression par lequel l'air est expulsé.

Le circuit pneumatique C2 comporte une branche C2.1 connectée directement à l'orifice de pression de la pompe P2 et trois branches C2.2, C2.3 et C2.4 toutes connectées à la branche C2.1.

La branche C2.2 relie l'orifice de pression de la pompe P2 et l'intérieur du gant via la branche C2.1. La branche C2.2 comporte un distributeur 3/2 172 formant une vanne de distribution comportant un premier orifice connecté à la branche C2.1, un deuxième orifice connecté au gant G et un troisième orifice connecté à l'orifice de dépression de la pompe, la vanne 172 pouvant être commutée pour relier le deuxième orifice au premier orifice ou au troisième orifice.

La branche C2.3 relie la pompe P2 et l'intérieur du joint gonflable 148 via la branche C2.1. Elle comporte un distributeur 2/2 166 formant une vanne de distribution comportant un premier orifice connecté à la branche C2.1 et un deuxième orifice connecté au joint gonflable.

La branche C2.4 comporte un distributeur 2/2 170 comportant un orifice relié à la branche C2.1 et un orifice relié à l'environnement extérieur.

Le circuit comporte également une branche C2.5 comportant un distributeur 3/2 176 comportant un orifice relié à l'orifice de dépression de la pompe P2, un orifice relié à au gant via la vanne 172 et un orifice relié vers l'extérieur. La vanne 176 peut commuter pour mettre en communication le premier orifice avec le deuxième orifice ou avec le troisième orifice.

Comme pour le dispositif D1, les moyens de déplacement des tiroirs des distributeurs 166, 170, 172, 176 sont avantageusement des moyens électromécaniques, les distributeurs étant des électrodistributeurs ou électrovannes. En variante, les moyens de déplacement des tiroirs sont des moyens pneumatiques ou des moyens mécaniques.

Les distributeurs 166, 170, 172, 176 sont avantageusement commandés par une unité de contrôle UC' par exemple portée par une carte électronique.

Il sera également compris que tout ou partie des distributeurs 166, 170, 172, 176 peuvent être remplacés par des vannes individuelles commandées par l'unité de contrôle UC'.

Le dispositif D3 comporte également des moyens 178 pour vérifier la pression dans le gant afin de vérifier son étanchéité. En effet si la pression diminue, cela signifie que le gant n'est pas étanche. Par exemple les moyens comportent un capteur de pression.

Le fonctionnement du dispositif D3 va maintenant être décrit. Le gant est monté de manière étanche sur un dispositif de connexion d'une boîte à gants par l'intermédiaire du rond de gant de manière connue.

Le gant est déployé à l'intérieur de l'isolateur.

Le dispositif D3 est monté dans le rond de gant R (figure 6).

Tout d'abord le joint gonflable 148 est gonflé. Pour cela les vannes 166 et 172 sont dans la position de la figure 7, la vanne 170 est commutée pour interrompre la circulation dans la branche C2.4 et la vanne 172 est commutée pour relier l'orifice de dépression à l'environnement extérieur. La pompe est actionnée. Le joint 148 est gonflé. La pompe P2 est arrêtée lorsque le joint est suffisamment gonflé. La vanne 166 est commutée pour isoler le joint.

La phase de test débute. L'unité de contrôle commande le distributeur 3/2 172 pour connecter la pompe P2 à l'intérieur du gant G et active la pompe P2 de sorte à gonfler le gant G, par exemple à une pression de l'ordre 10 mbar. Lorsque le niveau de pression souhaité est atteint, le fonctionnement de la pompe P2 est interrompu et le distributeur 3/2 172 est commuté de sorte à isoler l'intérieur du gant G.

Le niveau de pression dans le gant G est ensuite suivi.

Si la pression diminue, cela signifie que le gant G comporte une fuite et le gant G est considéré comme défectueux. Le gant doit être remplacé.

Si la pression dans le gant est stable, on en conclut que le gant est étanche et peut être utilisé.

Lorsque le test est terminé, le joint et le gant sont dégonflés. De manière très avantageuse, une étape de dégonflage ou purge forcé du gant a lieu. Les vannes 166 et 172 sont commutées pour relier l'intérieur du gant à l'orifice de dépression de la pompe P2 et la vanne 170 est commutée pour relier l'orifice de pression de la pompe à l'environnement extérieur via la branche C2.4. La pompe P2 est actionnée aspirant l'air du gant G, ce qui assure un dégonflage rapide du gant qui présente un volume important.

Le joint est relié directement à l'environnement extérieur en commutant la vanne 166. En effet le joint présente un volume sensiblement plus faible que celui du gant, son dégonflage naturel est donc très rapide.

Le dispositif D3 présente donc l'avantage d'assurer un dégonflage rapide du gant. En outre il présente une grande compacité.

En outre le circuit pneumatique C2 présente l'avantage de pouvoir être utilisé pour un dispositif D1 de test d'étanchéité d'une partie alpha ou pour un dispositif D2 de test d'étanchéité d'une partie bêta, afin de tester un système de transfert à double porte. En effet la connexion entre la vanne 166 et l'orifice de dépression de la pompe permet de générer une dépression dans le système à tester, ce qui est souhaité pour tester un système de transfert à double porte.

Ainsi le circuit pneumatique C2 permet de tester à la fois des gants et tout objet de connexion souple tel qu'énumérés ci-dessus et les systèmes de transfert à double porte selon qu'il est monté sur un dispositif D1, D2 ou D3.

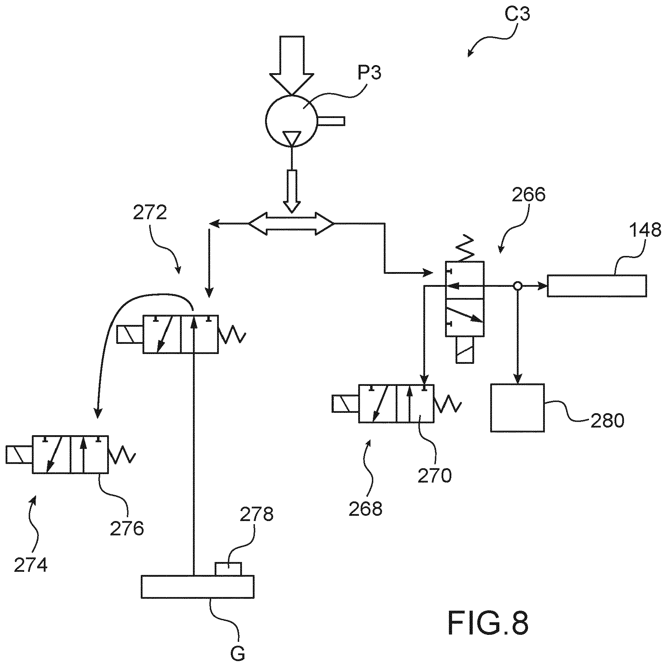

Sur la figure 8, on peut voir un autre exemple de circuit C3 adapté au dispositif permettant de tester l'étanchéité d'un gant G destiné à être monté dans un rond de boîte à gants.

De manière avantageuse, les moyens de connexion pneumatique comportent un premier distributeur 3/2 266 formant une vanne de distribution, comportant un premier orifice connecté à la pompe P3, un deuxième orifice connecté au joint gonflable 148 et un troisième orifice connecté à un premier système de purge 268 permettant de dégonfler le joint 148.

Le premier distributeur 3/2 266 comporte un tiroir tel qu'il peut connecter la pompe P3 et le joint 148 ou le joint 148 et le premier système de purge 268.

Par exemple le premier système de purge 268 comporte un distributeur 2/2 270 entre une zone de purge et le troisième orifice du premier distributeur 3/2 266.

De manière avantageuse, les moyens de connexion pneumatique comportent un deuxième distributeur 3/2 272 formant une vanne de distribution, comportant un premier orifice connecté à la pompe P3, un deuxième orifice connecté à l'intérieur du gant G et un troisième orifice connecté à un deuxième système de purge 274 permettant de purger l'intérieur du gant G.

Le deuxième distributeur 3/2 272 comporte un tiroir tel qu'il peut connecter la pompe P3 et l'intérieur du gant G ou l'intérieur du gant G et le deuxième système de purge 274.

Par exemple le deuxième système de purge 274 comporte un distributeur 2/2 276 entre une zone de purge et le troisième orifice du deuxième distributeur 3/2 272.

Le fonctionnement du dispositif de test de l'étanchéité d'un gant équipé du circuit C3 va maintenant être décrit.

Le dispositif de test est monté dans le rond de gant R.

Les distributeurs 270, 276 des systèmes de purge sont dans un état de fermeture.

L'unité de contrôle commande le premier distributeur 3/2 266 de sorte à connecter la pompe P3 au joint 148 et commande la pompe P3 pour gonfler le joint 148. Lorsque le joint 148 est suffisamment gonflé la pompe P3 est arrêtée. Le premier distributeur 3/2 266 est commandé pour isoler le joint 148 de la pompe P3. Le joint 148 est relié au distributeur 270 qui est en position obturée. L'intérieur du gant délimité par le dispositif de test et le joint gonflable forme un volume de test.

La phase de test débute. L'unité de contrôle commande le deuxième distributeur 3/2 272 connectant la pompe P3 à l'intérieur du gant G et active la pompe P3 de sorte à gonfler le gant G, par exemple à une pression de l'ordre 10 mbar. Lorsque le niveau de pression souhaité est atteint, le fonctionnement de la pompe P3 est interrompu et le deuxième distributeur 3/2 272 est commuté de sorte à isoler l'intérieur du gant G en le connectant au distributeur 276 du deuxième système de purge 274 qui est en position obturée.

Le niveau de pression dans le gant G est ensuite suivi.

Si la pression diminue, cela signifie que le gant G comporte une fuite et le gant G est considéré comme défectueux. Si la pression dans le gant est stable, on en conclut que le gant est étanche et peut être utilisé.

Les distributeurs 270, 276 des systèmes de purge 268, 274 sont ensuite commandés pour connecter le joint 148 et le gant G aux systèmes de purge 268, 274 respectivement.

Le déroulement du test d'étanchéité et la commande des distributeurs et de la pompe des différents dispositifs décrits ci-dessus sont de préférence automatisés, l'unité de commande émettant des ordres aux distributeurs et à la pompe selon une séquence déterminée et envoyant un message à l'utilisateur pour informer du résultat du test, par exemple au moyen d'un voyant de couleur. Le test est simplifié et les risques de mauvaises manipulations sont sensiblement réduits.

En variante, on peut envisager que l'utilisateur commande manuellement tout ou partie des distributeurs et la pompe suivant la séquence déterminée.

Il sera compris que la configuration des circuits pneumatiques peut varier sensiblement en fonction notamment de la place disponible et du nombre de distributeurs pouvant être utilisés.

Le dispositif de test selon l'invention présente l'avantage d'être compact et de masse réduite du fait de la mise en œuvre d'une seule pompe pour assurer l'étanchéité du montage du dispositif sur le système à tester et pour effectuer le test d'étanchéité.

En outre le dispositif est d'utilisation relativement simple. De plus les risques de dysfonctionnement du fait du nombre limité de composants sont réduits.

## Revendications

1. Dispositif de test d'étanchéité d'au moins un système pour isoler deux milieux de manière étanche, ledit dispositif de test comportant un boîtier (36) comprenant un joint gonflable (48, 148) destiné à venir, à l'état gonflé, en contact avec le système et à assurer une étanchéité permettant de définir un volume de test entre le système et le boîtier, une pompe pneumatique (P1, P2) et un circuit pneumatique (C1, C2) configuré, dans une première étape, pour connecter la pompe (P1, P2) au joint gonflable (48, 148) de sorte que la pompe (P1, P2) gonfle le joint gonflable (48, 148), et dans une deuxième étape, pour connecter la pompe (P1, P2) au volume de test de sorte que la pompe (P1, P2) génère dans le volume de test une pression à une valeur donnée, et des moyens (78, 178) pour mesurer la pression dans le volume de test, **caractérisé en ce que** le circuit pneumatique (C1, C2) est configuré pour assurer au moins une connexion du volume de test avec un orifice de dépression de la pompe.

2. Dispositif de test d'étanchéité selon la revendication 1, dans lequel le circuit pneumatique comporte au moins un distributeur (66, 166) entre la pompe (P1, P2) et le joint gonflable (48, 148), au moins un distributeur entre la pompe et le volume de test, et au moins un distributeur entre le joint gonflable, le volume de test et une zone de vidange, et dans lequel le distributeur entre la pompe et le volume de test est configuré pour assurer au moins une connexion du volume de test avec l'orifice de dépression de la pompe, les distributeurs étant avantageusement des électrovannes.

3. Dispositif de test d'étanchéité selon la revendication 2, dans lequel le distributeur entre la pompe et le volume de test est configuré pour assurer une connexion du volume de test avec un orifice de pression de la pompe.

4. Dispositif de test d'étanchéité selon l'une des revendications 1 à 3, comportant une unité de contrôle (UC, UC') configurée pour commander la pompe et le circuit pneumatique.

5. Dispositif de test d'étanchéité selon les revendications 3 et 4, dans lequel l'unité de commande est configurée pour commander les distributeurs de sorte à connecter, dans une phase, le joint gonflable à l'orifice de pression de la pompe et dans une autre phase suivante le volume de test à l'orifice de dépression de la pompe.

6. Dispositif de test d'étanchéité selon l'une des revendications 1 à 5, dans lequel le circuit pneumatique comporte des moyens de surveillance (80) de pression dans le joint gonflable.

7. Dispositif de test d'étanchéité selon l'une des revendications 1 à 6, dans lequel la pompe est une pompe à diaphragme.

8. Dispositif de test d'étanchéité selon l'une des revendications 1 à 7, le système à vérifier étant un système de transfert à double porte d'un isolateur (10), dans lequel la pompe est configurée pour réduire la pression dans le volume de test par rapport à la pression extérieure ou le système à vérifier étant un système de transfert à double porte d'un conteneur (12), dans lequel la pompe est configurée pour réduire la pression dans le volume de test par rapport à la pression extérieure.

9. Dispositif de test d'étanchéité selon la revendication 8, comportant des moyens de fixation configurés pour coopérer avec le système à tester, par exemple des moyens de fixation de type baïonnette (30).

10. Dispositif de test d'étanchéité selon l'une des revendications 1 à 7, le système à vérifier comprenant au moins une partie souple (S), dans lequel la pompe est configurée pour gonfler la partie souple.

11. Dispositif de test d'étanchéité selon l'une des revendications 1 à 10 en combinaison avec les revendications 3 et 4, le système à vérifier étant soit un système comprenant une partie souple (S), soit un système de transfert à double porte d'un isolateur (10) ou d'un conteneur (12), dans lequel, dans le cas du test d'un système comprenant une partie souple, l'unité de contrôle est configurée pour connecter dans une phase de test le système comprenant une partie souple à l'orifice de pression de la pompe et pour connecter, à la fin du test, le système comprenant une partie souple à l'orifice de dépression de la pompe et, dans le cas du test d'un système de transfert à double porte, l'unité de contrôle est configurée pour connecter dans une phase de test le volume de test à l'orifice de dépression de la pompe.

12. Dispositif de test d'étanchéité selon l'une des revendications précédentes en combinaison avec la revendication 4, dans lequel l'unité de contrôle comporte des moyens pour émettre un signal représentatif du résultat du test d'étanchéité.

13. Procédé de test d'étanchéité d'un système pour isoler deux milieux de manière étanche mettant en œuvre un dispositif de test d'étanchéité selon l'une des revendications 1 à 12, et comprenant les phases suivantes :
- Montage du dispositif sur le système,
- Connexion pneumatique de la pompe au joint gonflable,
- Activation de la pompe jusqu'à ce que la pression dans le joint gonflable atteigne une première valeur donnée, laquelle étant par exemple de l'ordre de 2 bar,
- Arrêt de la pompe,
- Connexion pneumatique de la pompe au volume de test,
- Activation de la pompe pour établir une pression à une deuxième valeur donnée dans le volume de test,
- Arrêt de la pompe,
- Suivi de la pression dans le volume de test,
- Émission d'un signal représentatif du résultat du test,
- Vidange du joint gonflable et du volume de test le cas échéant.

14. Procédé de test d'étanchéité selon la revendication 13, le système étant un système de transfert à double porte d'un isolateur ou d'un conteneur, la première valeur donnée étant une pression inférieure à la pression extérieure.

15. Procédé de test d'étanchéité selon la revendication 13, le système étant un système comprenant une partie souple, la deuxième valeur étant une pression positive de l'ordre de quelques mbar à quelques dizaines de mbar, avantageusement pour l'étape de vidange, le système comprenant une partie souple étant connectée à l'orifice de dépression de la pompe.

## Patentansprüche

1. Dichtheitsprüfvorrichtung für mindestens ein System zum dichten Isolieren zweier Medien, wobei die Prüfvorrichtung ein Gehäuse (36) mit einer aufblasbaren Dichtung (48, 148), die dazu bestimmt ist, im aufgeblasenen Zustand in Kontakt mit dem System zu kommen, um eine Dichtigkeit zu gewährleisten, die es ermöglicht, zwischen dem System und dem Gehäuse ein Prüfvolumen zu definieren, eine pneumatische Pumpe (P1, P2) und einen pneumatischen Kreislauf (C1, C2), der in einem ersten Schritt konfiguriert ist, um die Pumpe (P1, P2) derart mit der aufblasbaren Dichtung (48, 148) zu verbinden, dass die Pumpe (P1, P2) die aufblasbare Dichtung (48, 148) aufbläst, und in einem zweiten Schritt, um die Pumpe (P1, P2) mit dem Prüfvolumen derart zu verbinden, dass die Pumpe (P1, P2) im Prüfvolumen einen Druck mit vorgegebenem Wert erzeugt, und Mittel (78, 178) zum Messen des Drucks im Prüfvolumen umfasst, **dadurch kennzeichnet, dass**
der pneumatische Kreislauf (C1, C2) konfiguriert ist, um mindestens eine Verbindung des Prüfvolumens mit einem Vakuumanschluss der Pumpe zu gewährleisten.

2. Dichtheitsprüfvorrichtung nach Anspruch 1, wobei der pneumatische Kreislauf mindestens einen Verteiler (66, 166) zwischen der Pumpe (P1, P2) und der aufblasbaren Dichtung (48, 148), mindestens einen Verteiler zwischen der Pumpe und dem Prüfvolumen und mindestens einen Verteiler zwischen der aufblasbaren Dichtung, dem Prüfvolumen und einem Entleerungsbereich umfasst, und wobei der Verteiler zwischen der Pumpe und dem Prüfvolumen konfiguriert ist, um mindestens eine Verbindung des Prüfvolumens mit dem Vakuumanschluss der Pumpe zu gewährleisten, wobei die Verteiler vorteilhafterweise Magnetventile sind.

3. Dichtheitsprüfvorrichtung nach Anspruch 2, wobei der Verteiler zwischen der Pumpe und dem Prüfvolumen konfiguriert ist, um eine Verbindung des Prüfvolumens mit einem Vakuumanschluss der Pumpe zu gewährleisten.

4. Dichtheitsprüfvorrichtung nach einem der Ansprüche 1 bis 3,
umfassend eine Steuereinheit (UC, UC'), die konfiguriert ist, um die Pumpe und den pneumatischen Kreislauf zu steuern.

5. Dichtheitsprüfvorrichtung nach den Ansprüchen 3 und 4,
wobei die Steuereinheit konfiguriert ist, um die Verteiler derart zu steuern, dass sie in einer Phase die aufblasbare Dichtung mit dem Vakuumanschluss der Pumpe und in einer anderen folgenden Phase das Prüfvolumen mit dem Vakuumanschluss der Pumpe verbinden.

6. Dichtheitsprüfvorrichtung nach einem der Ansprüche 1 bis 5,
wobei der pneumatische Kreislauf Einrichtungen zur Drucküberwachung (80) in der aufblasbaren Dichtung umfasst.

7. Dichtheitsprüfvorrichtung nach einem der Ansprüche 1 bis 6, wobei die Pumpe eine Membranpumpe ist.

8. Dichtheitsprüfvorrichtung nach einem der Ansprüche 1 bis 7, wobei das zu prüfende System ein Zweiwege-Transfersystem eines Isolators (10) ist, wobei die Pumpe konfiguriert ist, um den Druck im Prüfvolumen gegenüber dem Außendruck zu reduzieren, oder das zu prüfende System ein Zweiwege-Transfersystem eines Behälters (12) ist, wobei die Pumpe konfiguriert ist, um den Druck im Prüfvolumen gegenüber dem Außendruck zu reduzieren.

9. Dichtheitsprüfvorrichtung nach Anspruch 8, umfassend Befestigungsmittel, die konfiguriert sind, um mit dem zu prüfenden System zusammenwirken, beispielsweise Befestigungsmittel vom Bajonett-Typ (30).

10. Dichtheitsprüfvorrichtung nach einem der Ansprüche 1 bis 7, wobei das zu prüfende System mindestens einen flexiblen Teil (S) umfasst, wobei die Pumpe konfiguriert ist, um den flexiblen Teil aufzublasen.

11. Dichtheitsprüfvorrichtung nach einem der Ansprüche 1 bis 10 in Verbindung mit den Ansprüchen 3 und 4, wobei das zu prüfende System einen flexiblen Teil (S) umfasst und ein Zweiwege-Transfersystem eines Isolators (10) oder eines Behälters (12) ist,
wobei im Falle des Prüfens eines einen flexiblen Teil umfassenden Systems die Steuereinheit konfiguriert ist, um in einer Prüfphase das einen flexiblen Teil umfassenden System mit dem Vakuumanschluss der Pumpe zu verbinden und am Ende der Prüfung das einen flexiblen Teil umfassende System mit dem Vakuumanschluss der Pumpe zu verbinden, und im Falle des Prüfens eines Zweiwege-Transfersystems die Steuereinheit konfiguriert ist, um in einer Prüfphase das Prüfvolumen mit dem Vakuumanschluss der Pumpe zu verbinden.

12. Dichtheitsprüfvorrichtung nach einem der vorangehenden Ansprüche in Kombination mit Anspruch 4, wobei die Steuereinheit eine Einrichtung zum Senden eines für das Ergebnis der Dichtheitsprüfung repräsentativen Signals umfasst.

13. Dichtheitsprüfverfahren für ein System zum dichten Isolieren zweier Medien, das von einer Dichtheitsprüfvorrichtung nach einem der Ansprüche 1 bis 12 durchgeführt wird und die folgenden Phasen umfasst:
- Montieren der Vorrichtung auf dem System,
- pneumatisches Verbinden der Pumpe mit der aufblasbaren Dichtung,
- Aktivieren der Pumpe, bis der Druck in der aufblasbaren Dichtung einen ersten vorgegebenen Wert erreicht, der beispielsweise in der Größenordnung von 2 bar liegt,
- Anhalten der Pumpe,
- pneumatisches Verbinden der Pumpe mit dem Prüfvolumen,
- Aktivieren der Pumpe, um im Prüfvolumen einen Druck mit einem zweiten vorgegebenen Wert herzustellen,
- Anhalten der Pumpe,
- Überwachen des Drucks im Prüfvolumen,
- Senden eines für das Prüfergebnis repräsentativen Signals,
- Entleeren der aufblasbaren Dichtung und gegebenenfalls des Prüfvolumens.

14. Dichtheitsprüfverfahren nach Anspruch 13, wobei das System ein Zweiwege-Transfersystem eines Isolators oder eines Behälters ist, wobei der erste vorgegebene Wert ein Druck ist, der niedriger als der Außendruck ist.

15. Dichtheitsprüfverfahren nach Anspruch 13, wobei das System ein einen flexiblen Teil umfassendes System ist, wobei der zweite Wert ein positiver Druck in der Größenordnung von einigen mbar bis zu einigen zehn mbar, vorteilhafterweise für den Entleerungsschritt, ist, wobei das System einen flexiblen Teil umfasst, der mit dem Vakuumanschluss der Pumpe verbunden ist.

## Claims

1. Device for testing the sealing of at least one system for insulating two mediums in a sealed manner, said test device including a casing (36) comprising an inflatable seal (48, 148) configured to contact, in the inflated state, with the system and to ensure a sealing enabling the definition of a test volume between the system and the casing, a pneumatic pump (P1, P2) and a pneumatic circuit (C1, C2) configured, in a first step, to connect the pump (P1, P2) to the inflatable seal (48, 148) such that the pump (P1, P2) inflates the inflatable seal (48, 148), and in a second step, to connect the pump (P1, P2) to the test volume such that the pump (P1, P2) generates in the test volume a pressure at a given value, and means (78, 178) for measuring the pressure in the test volume, **characterized in that** the pneumatic circuit (C1, C2) is configured to ensure at least a connection of the test volume with a depression orifice of the pump.

2. Sealing test device according to claim 1, wherein the pneumatic circuit includes at least one distributor (66, 166) between the pump (P1, P2) and the inflatable seal (48, 148), at least one distributor between the pump and the test volume, and at least one distributor between the inflatable seal, the test volume and a draining zone, and wherein the distributor between the pump and the test volume is configured to ensure at least a connection of the test volume with the depression orifice of the pump.

3. Sealing test device according to claim 2, wherein the distributor between the pump and the test volume is configured to ensure a connection of the test volume with a pressure orifice of the pump.

4. Sealing test device according to one of claims 1 to 3, including a control unit (UC, UC') configured to command the pump and the pneumatic circuit.

5. Sealing test device according to claims 3 and 4, including a control unit (UC, UC') configured to command the pump and the pneumatic circuit, and wherein the command unit is configured to command the distributors so as to connect, in a phase, the inflatable seal to the pressure orifice of the pump and, in another following phase, the test volume to the depression orifice of the pump.

6. Sealing test device according to one of claims 1 to 5 wherein the pneumatic circuit includes means (80) for monitoring pressure in the inflatable seal.

7. Sealing test device according to one of claims 1 to 6, wherein the pump is a diaphragm pump.

8. Sealing test device according to one of claims 1 to 7, the system to be verified being a double door transfer system of an insulator, wherein the pump is configured to reduce the pressure in the test volume with respect to the outer pressure or the system to be verified being a double door transfer system of a container (12), wherein the pump is configured to reduce the pressure in the test volume with respect to the outer pressure.

9. Sealing test device according to claim 8, including fixing means configured to engage with the system to be tested, for example bayonet type fixing means (30).

10. Sealing test device according to one of claims 1 to 7, the system to be verified comprising at least one flexible part (S), wherein the pump is configured to inflate the flexible part.

11. Sealing test device according to one of claims 1 to 10 combined with claims 3 and 4, the system to be verified being either a system comprising a flexible part (S), or a double door transfer system of an insulator (10) or of a container (12), wherein, in the case of the test of a system comprising a flexible part, the control unit is configured to connect, in a test phase, the system comprising a flexible part to the pressure orifice of the pump and to connect, at the end of the test, the system comprising a flexible part to the depression orifice of the pump and, in the case of the test of a double door transfer system, the control unit is configured to connect, in a test phase, the test volume to the depression orifice of the pump.

12. Sealing test device according to one of the preceding claims combined with claim 4, wherein the control unit includes means for emitting a signal representative of the result of the sealing test.

13. Method for testing the sealing of a system for insulating two mediums in a sealed manner implementing a sealing test device according to one of claims 1 to 12, and comprising the following phases:
- Mounting of the device on the system.
- Pneumatic connection of the pump to the inflatable seal.
- Activation of the pump until the pressure in the inflatable seal reaches a first given value, said first given value being for example 2 bars.
- Stopping of the pump.
- Pneumatic connection of the pump to the test volume.
- Activation of the pump to establish a pressure at a second given value in the test volume.
- Stopping of the pump.
- Monitoring of the pressure in the test volume.
- Emission of a signal representative of the result of the test.
- Draining of the inflatable seal and of the test volume, if necessary.

14. Sealing test method according to claim 13, the system being a double door transfer system of an insulator or of a container, the first given value being a pressure lower than the outer pressure.

15. Sealing test method according to claim 13, the system being a system comprising a flexible part, the second value being a positive pressure of the order of a few mbar to a few tens of mbar, wherein advantageously for the draining step, the system comprising a flexible part connected to the depression orifice of the pump.
